# EUROPEAN PATENT APPLICATION

(11) **EP 1 844 845 A2**
(43) Date of publication of application: **17.10.2007**
(21) Application number: 07251531.5
(22) Date of filing: 05.04.2007
(51) Int. Cl.: B01D 53/94, B01J 8/02, B01J 8/06

(54) **Catalytic reactor with a static mixer**

(30) Priority: 10.04.2006 US 401021
(71) Applicant: United Technologies Corporation, Hartford, CT 06101 (US)
(72) Inventor: Burd, Steven W., Cheshire, CT 06410 (US)
(74) Representative: Leckey, David Herbert

(57) **Abstract**

A catalyst conduit (14) for a catalytic comprises a tube (14) including an inlet (26) and an outlet (28), an interior surface (34) and an exterior surface (36), and an insert (16) for modifying fluid flow mounted within the tube (14). An oxidation catalyst (44) is deposited on at least a portion of the tube (14).

## Description

### BACKGROUND OF THE INVENTION

The present invention is directed to a system and method for combusting hydrocarbon fuels in an efficient manner which minimizes pollutant emissions, particularly NOₓ emissions.

Exhaust gases produced in the combustion of hydrocarbon fuels by engines contribute to atmospheric pollution. Exhaust gases typically contain nitric oxide (NO), nitrogen dioxide (NO₂), carbon monoxide, and unburned hydrocarbons. Nitrogen oxides are a cause of smog, acid rain, and depletion of stratospheric ozone. With high combustion temperatures in an engine, oxygen and nitrogen combine to form the pollutants NO and NO₂ (collectively known as "NOₓ"). Typical fuels reacting with air exceed the threshold temperature which results in NOₓ formation.

A reduction in the formation of NOₓ is desirable. One method to control NOₓ is to employ a catalyst that allows low-temperature reaction of fuel and air. Most, if not all, of the fuel can be reacted at a moderate temperature, thus inhibiting formation of NOₓ. The use of a catalyst results in a pre-reaction of a portion of a fuel to stabilize the main combustion process. The catalytic process is referred to as catalytic combustion.

When reacting fuel with a catalyst, heat is generated. This heat must be controlled to result in a lower combustion temperature. Typically only a portion of the total fuel to be burned is reacted in the catalyst chamber. One solution to the problem of heat production is to provide a stream of cooling air about a stream of fluid that is in contact with the catalyst or a substrate to which the catalyst is attached or resides. Such a process uses heat exchange in which certain channels contain the catalyzed fluid, while other channels contain air for cooling and absorbing heat from the catalytic reaction. These two fluid streams can then be mixed upon exiting the heat exchanger and combusted with a reduction of NOₓ.

In catalytic combustors (or catalytic reactors), hydrocarbon fuel is mixed with a first air stream to form a fuel and air mixture having an equivalent ratio greater than unity, or stoichiometry greater than 1.0, and partially oxidized by contacting the fuel/air fluid mixture with an oxidation catalyst stage, thereby generating the heat of reaction in a partial oxidation product stream comprising hydrogen and carbon oxides. The reaction is intended to be pure catalytic, thus minimizing the formation of oxides of nitrogen (NOₓ).

A portion of the heat of reaction is conducted through the wall of a substrate on which the catalyst resides and is removed via the back side convection and conduction heat transfer to the second air stream and /or compatible cooling fluid. The partial oxidation product stream is mixed with a second air stream, which is raised in temperature from its initial state via the heat of reaction, to combust the fuel in a down stream combustor. The down stream combustor can include additional fuel or air mixtures that contribute to a combustion in single or multiple zones.

The fuel/air mixture flows into a catalytic oxidation stage and contacts an oxidation catalyst which partially oxidizes the mixture to generate heat and a partial oxidation product stream comprising hydrogen, carbon oxides (primarily CO), and unreacted hydrocarbon fuel. Catalytic oxidation in this context is intended to drive a rapid oxidation or oxidative pyrolysis reaction carried out at a temperature below that required to support thermal combustion or combustion without a flame at a temperatures below which thermal NOₓ forms in appreciable amounts. Partial oxidation means that there is insufficient oxygen available to completely convert fuel to carbon dioxide and water, and thus fully liberate the chemical energy stored in the fuel.

### BRIEF SUMMARY OF THE INVENTION

The current invention seeks to improve current catalytic reactor designs. In a disclosed embodiment of the invention, a catalytic tube insert promotes turbulence in fluid flow passing through the catalytic tube. The insert is used in a catalytic reactor to allow for a method of improved combusting of a catalyzed fuel by either adding to the catalyst surface area, or increasing the residence time of a fluid with the catalyst, or both.

### BRIEF DESCRIPTION OF THE DRAWINGS

FIG. 1A depicts a longitudinal cross-section of a first embodiment of a catalytic reactor containing an insert within a catalyst tube.
FIG. 1B depicts a longitudinal cross-section of a second embodiment of a catalytic reactor containing an, insert within a catalyst tube.
FIG. 1C depicts a longitudinal cross-section of a third embodiment of a catalytic reactor containing an insert within a catalyst tube.
FIG. 2 is an end view of catalytic reactor illustrating various cross-sectional profiles of four different inserts.
FIG. 3 is a perspective view of a catalytic reactor with a portion of the housing and catalytic tubes removed to show inserts with the tubes.

### DETAILED DESCRIPTION

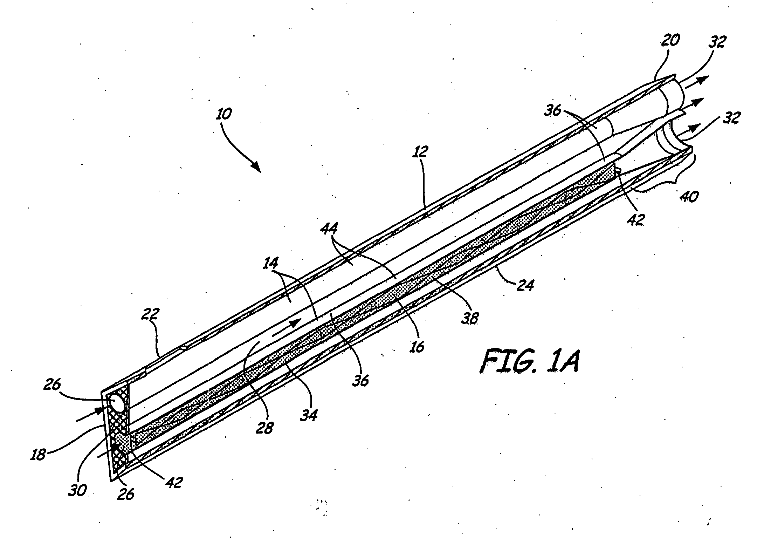

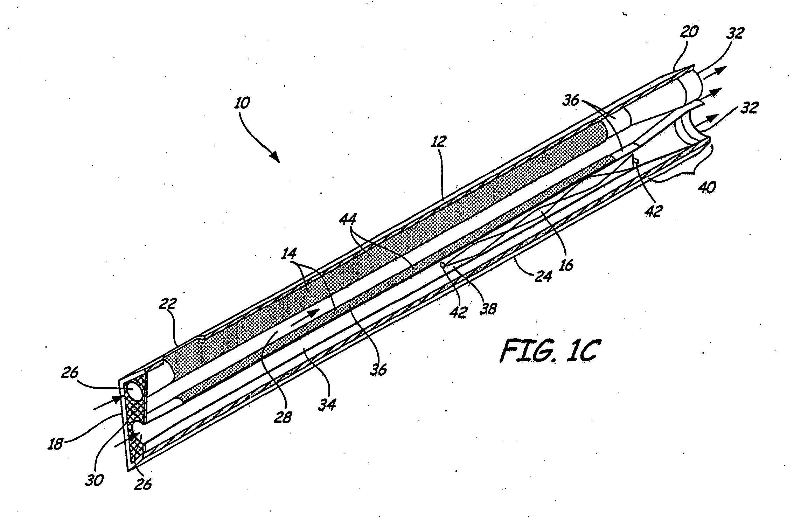

FIG. 1A depicts a longitudinal cross-section of catalytic reactor 10, which includes housing 12, catalyst tubes 14, and insert 16. Catalytic reactor 10 may be integrated with a gas turbine combustion system (not illustrated). In this embodiment, housing 12 contains an entrance 18 and an exit 20. Housing 12 contains at least one aperture 22 for introducing an additional fluid into housing 12. A wall 24 of housing 12 and exterior surface 36 of catalyst tubes 14 create a fluid flow path 28 from the entrance 18 or aperture 22 to the exit 20. Entrance 18 comprises a grate 30 connected to wall 24 of housing 12. Grate 24 secures catalyst tubes 14 in place within the housing 12, while allowing for the introduction of fluids into catalyst tubes 14 and flow path 28. Grate 30 and wall 24 of housing 12 are constructed from metal or other material system suited for the application. Exit 20 allows fluids flowing within flow path 28 to exit the housing 12.

Catalyst tubes 14 are made from a heat conducting material and adapted for conducting fluid flow internally and within the housing 12. Catalyst tubes 14 have a tube entrance 26, a tube exit 32, an interior surface 34, and an exterior surface 36. The interior surface 34 creates an interior flow path 38 within the catalyst tube 14. In one embodiment, a portion 40 of catalyst tube 14 adjacent the tube exit 32 contains a differing cross section to change the velocity or direction of the fluid exiting the catalyst tube 14.

Although shown as cylindrical, the catalyst tubes can be of varying geometries, for example, round, lobed, polygonal, elliptical, or other cross-sectional shapes. Similarly, although illustrated as generally linear or straight, catalyst tubes 14 may be twisted, or of varying cross-sectional shapes. In all embodiments, interior fluid flow paths 38 exist within the interior surface 34 of catalyst tubes 14.

Flow paths 28 within housing 12 are defined by the conduit exterior surfaces 36 and wall 24. Flow paths 28 are in communication with aperture 22 and exit 20. Flow paths 28 can have varying configurations dependent upon the shape and spacing of catalyst tubes 14 and wall 24 of housing 12. Flow paths 28 permit the flow and diffusion of a fluid in a manner to allow heat transfer with the fluids flowing within catalyst tubes 14.

An insert 16 is located within each catalyst tube 14. Insert 16 is constructed from a heat conducting material, and may be composed of the same material as the catalyst tubes 14. Tabs 42 secure insert 16 within catalyst tube 14. Tabs 42 are attached to the ends 45 and 46 of insert 16, and extend to the interior surface 34 of catalyst tube 14, where tabs 42 are secured such as by welding or other means. Alternately, tabs 42 or insert 16 itself may extend to the end of tube 14 for attachment to the end of tube 14 or grate 30. Other attachment or contact points may be provided to assist in heat removal from insert 16 to substrate comprising catalytic tube 14.. In the embodiment illustrated, insert 16 is a twisted metal strip that extends the length of the catalyst tube 14 from entrance 30 to beginning of portion 40. Insert 16 creates a tortuous flow path internal to the catalyst tube 14. The result is a production of swirl to increase residence time within the catalyst tube, which results in more oxidation of a fluid comprised of fuel and air. Thus, the reaction per unit of length of catalyst tube 14 is increased.

A catalyst 44 is deposited on a portion of the conduit interior surface 34 and on a portion of insert 16. Catalyst 44 can be deposited anywhere in the flow path 38 through tube 14. A fuel-rich fuel/air mixture is mixed prior to delivery to interior flow path 38 created by catalytic tube 14. Alternately, mixing of fuel and air within flow path 38 is possible due to the turbulence of fluid flow created by insert 16.

When the fuel is a hydrocarbon and oxygen is the oxidizer, catalyst 44 may include group VIII noble metals, base metals, metal oxides, or a combination thereof. Elements including zirconium, vanadium, chromium, manganese, copper, platinum, palladium, ruthenium, osmium, iridium, rhodium, cerium, lanthanum, other elements of the lanthanide series, cobalt, nickel, and iron are all suitable, as well as chromium oxides, cobalt oxides, and alumina, or mixtures thereof. Catalyst 44 is applied directly to the substrate, or in an alternate embodiment, is applied to a bonding coat or washcoat composed of such materials as alumina, silica, zirconia, titania, magnesia, other refractory metal oxides, or a combination thereof.

The substrate comprising the catalytic tubes 14 and inserts 16 is fabricated from high-temperature materials. In one embodiment, high temperature nickel alloy is used. In alternate embodiments, high-temperature metal alloys are used, including alloys composed of iron, nickel, and/or cobalt, in combination with aluminum, chromium, and/or other alloying materials. Other substrate materials include ceramics, metal oxides, intermetallic materials, carbides, and nitrides. Metallic substrates and refractories are most preferred due to their excellent thermal conductivity, allowing effective backside cooling of the catalyst.

In the embodiment of FIG. 1A, a portion of interior surface 34 of catalytic tube 14 is coated with catalyst 44. Insert 16 is also coated with catalyst 44. In this embodiment, a first fluid comprising fuel/air mixture is introduced into catalytic tubes 14 at entrances 26. A second fluid, either air or additional fuel/air mixture, is introduced into catalytic reactor 10 at aperture 22, the second fluid absorbing the heat of the catalytic reaction to lower the temperature of the first fluid. Insert 16 not only slows the flow of the first fluid, but also acts to further the reaction of the first fluid.

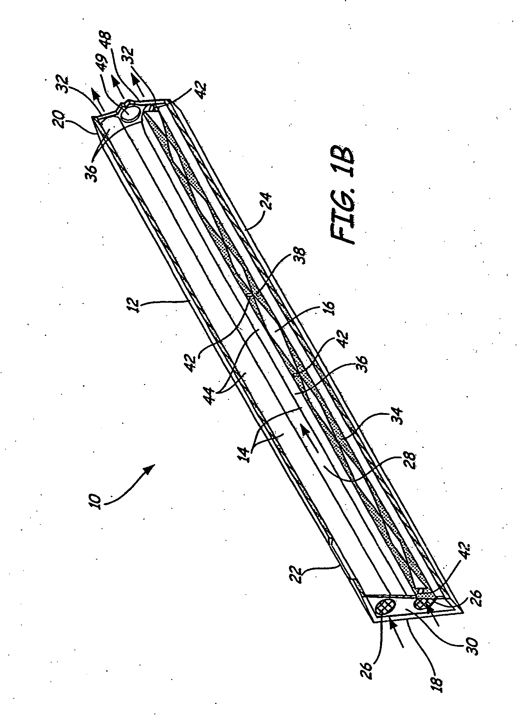

FIG. 1B depicts an alternate embodiment comprising a longitudinal cross-section of catalytic reactor 10, which includes housing 12, catalyst tubes 14, and insert 16. In this embodiment, interior surface 34 of catalytic tubes 14 are coated with catalyst 44. A first fluid comprising a fuel/air mixture is introduced into entrances 26 of catalytic tube 14, while a second fluid is introduced into aperture 22 of housing 12. The second fluid can be air, or a fuel/air mixture. Insert 16 within catalytic tube 14 slows the flow of the first fluid in flow path 38, or promotes flow with swirl or sense not parallel to the longitudinal axis of tube 14, resulting in longer residence time with the catalyst allowing for greater catalytic reaction for length. The fluids are discharged at exit 20 where they are mixed prior to and for the onset of combustion. Insert 16, catalytic tube 14 (and tube extension 40 if present), and catalyst 44 are structurally similar to those previously described, however, insert 16 does not contain a catalyst coating. The shape of insert 16 produces a turbulent flow of the first fluid. This results in a better mixing of the first and second fluids as they exit the catalytic reactor.

In this embodiment, grate 30 only allows for the introduction of fluid into catalyst tubes 14, while aperture 22 introduces fluid into flow path 28. Grate 30 may be constructed from a metal plate that contains apertures to allow the introduction of a fluid only within the catalyst tubes 14 at entrance 18. A plate 48 generally parallel to grate 30 is present at exit 20 and contains one or more apertures that act as an exit port 49 for fluids. Plate 48 also contains openings corresponding to tube exits 32 to permit the flow of fluid out of the catalytic tubes 14. In this embodiment, tabs 42 may be secured along the length of insert 16, and/or at the ends 45 and 46 of insert 16 or grate 30 to provide additional support compliance of insert 16 within tube 14.

FIG. 1C depicts another alternate embodiment comprising a longitudinal cross-section of catalytic reactor 10, which includes housing 12, catalyst tubes 14, and insert 16. The exterior surface 36 of the catalyst tube 14 is coated with catalyst 44. A first fluid consisting essentially of a fuel/air mixture is introduced into catalytic reactor 10 at aperture 22 and flows via flow path 28. A second fluid, typically air, is introduced into catalytic tubes 14 at entrances 26. Insert 16 is present for a portion of catalytic tube 14, and attached thereto with tabs 42 similar to prior embodiments. Insert 16 slows the movement of the second fluid through flow path 38 of catalytic tubes 14, or promotes swirling flow or flow with a sense that is contrary to the direction represented by the axis of tube 14. This allows the second fluid to remain in contact longer with the catalytic reaction surface or substrate to absorb more heat from the catalytic reaction, resulting in a higher temperature for the second fluid upon its exit from the catalytic reactor 10. Further, insert 16 promotes fluid turbulence and swirl that inherently provides higher heat transfer coefficients and heat removal from the tube wall. This quality also serves to aid in the mixing of fluids leaving catalytic tubes 14 at tube exits 32 with the fluid exiting flow path 38 of catalytic reactor 10 at exit 20. Although shown proximate exit 20, insert 16 could also be located proximate entrance 18, or anywhere therebetween.

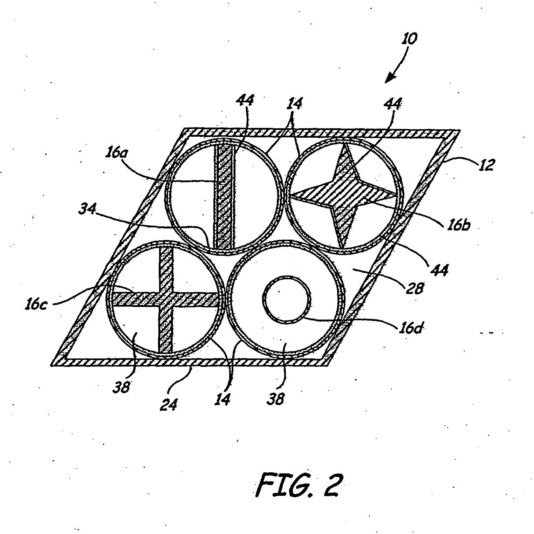

FIG. 2 is an end view representation of catalytic reactor 10 illustrating various cross-sectional profiles of inserts 16a-16d. Illustrated in FIG. 2 are wall 24 of housing 12, catalytic tubes 14, and inserts 16a-16d. Catalytic reactor 10 also contains chamber flow paths 28 as well as catalytic tube flow paths 38. Inserts 16a-16d modify the flow of fluids through flow paths 38 of catalytic tubes 14.

Inserts 16a-16d show a variety of differing profiles possible as inserts into catalytic tubes 14. Though four tubes are shown, applications may dictate that the tube array be more numerous or less in number that shown. Moreover, relative size of tubes and flow paths to chamber size may differ. Insert 16a is a flat metal strip. Insert 16b is a star shaped polygon. Insert 16c is a cross, while insert 16d is another conduit smaller in size than the internal diameter of conduit comprising catalytic tube 14. All inserts 16a-16d may be comprised of metals or conductive material, and may be covered entirely or on a portion thereof with a catalyst 44 (as illustrated by inserts 16a and 16b) as described above. Similarly, all inserts 16a-16d may be twisted about a longitudinal axis of catalytic tubes 14. The various shapes of inserts 16a-16d will create different flow paths 38 within similarly shaped catalytic tubes 14.

Inserts 16a-16c may be held in place in catalytic tubes 14 by securing the outer perimeter of the insert to the interior surface 34 of conduits 14. For example, inserts 16a-16c may be welded or adhered in place with adhesives or other means (friction or diffusion bond). In an alternate embodiment, inserts 16a-16c are held in place through an interference or friction fit of the insert within the catalytic tube. In yet another alternate embodiment, inserts 16a-16d are secured through the use of tabs 42 that are connected to the interior surface 34 of catalytic tubes 14 and the surface of inserts 16a-16d. Inserts 16a-16d are meant to be illustrative examples, and not limit the profile of inserts 16.

Other variations of inserts are envisioned, including metallic tape, static mixers, linear metal strips or rods which are sinusoidally waved, or corrugated, in the longitudinal direction, or any combination thereof. Similarly, the aforementioned inserts can be twisted, braided, coiled, or similarly manipulated prior to or after insertion into the catalytic tubes 14. Those skilled in the art will appreciate the numerous structures that can be designed based upon the specific application, thus the invention should not be considered limited to the insert geometries depicted in the embodiments presented.

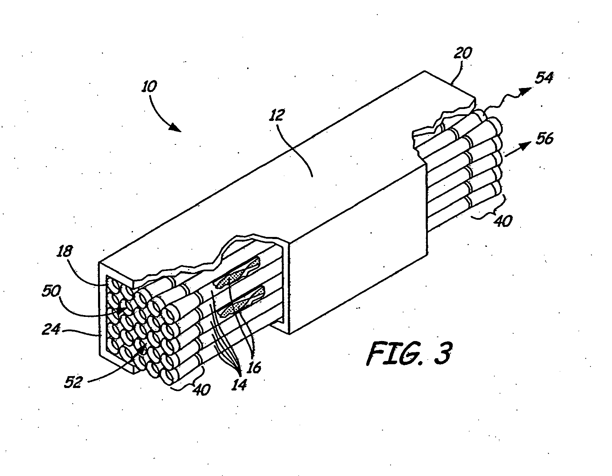

FIG. 3 is a perspective view of a catalytic reactor with a portion of the housing 12 and catalytic tubes 14 removed. Catalytic reactor 10 is a structure comprised housing 12, catalytic tubes 14, and inserts 16. In the embodiment shown in FIG. 3, the catalytic reactor 10 is generally constructed to contain a square-packed arrangement of parallel, equal-length, cylindrically-shaped catalytic tubes within housing 12. Although illustrated as a parallelopiped, other geometries for housing 12 are envisioned including cylindrical, polygonal prisms, toroidal, L- shaped, or combinations thereof. The catalytic tubes each contain an insert 16. In an alternate embodiment, only a portion of the catalytic tubes 14 contain inserts. As illustrated, catalytic tubes 14 contain expanded portions 40 near the entrance 18 and exit 20. The expanded portions 40 create a spacing between adjacent catalytic tubes 14 by providing a gap between the conduits, thus creating a flow path 28 as described above.

A first fluid of fuel/air mixture enters the catalytic tubes 14 at or near entrance 18 as represented by arrow 50. Simultaneously, a second fluid comprising ambient air is introduced into the flow paths between adjacent catalytic tubes 14 as represented by arrow 52. In an alternate embodiment, the second fluid is similar in composition to the first fluid and contains a fuel/air mixture. The interior surface of catalytic tubes 14 contain a catalyst which reacts with the first fluid and generates heat. The second fluid acts a cooling fluid and absorbs the heat generated by the reaction. The first fluid leaves the catalytic reactor 10 at exit 20. Due to the presence of the inserts 16 within the catalytic tubes 14, the fluid exits in an agitated flow pattern as represented by arrow 54. The second fluid is leaving exit 20 as a laminar flow as represented by arrow 56. The fluids 50, 52 mix upon leaving exit 20. The agitation of fluid flow created by inserts 16 aids in the mixing of the first and second fluids at exit 20 to create a single heated, and partially reacted, third fluid for combustion.

In the embodiment illustrated FIG. 3, catalytic tubes 14, including expanded portions 40, are cylindrical and concentric with a respective conduit centerline. In alternate embodiments, other cross-sectional geometries of the catalytic tubes 14 expanded portions 40 are envisioned, including ellipses, polygons, or combinations thereof for both the main portion and end portions of the catalytic tubes 14. Similarly, although shown as generally linear conduits, catalytic tubes 14 may comprise other shapes including coiled, helical, waved, inter-braided, fluted, or similar structures and any combination thereof, and are to be designed to fit within the geometry of housing 12.

A catalytic reactor of any of the disclosed embodiments is designed for maximum catalytic reaction in normal operating conditions, while minimizing variations in chemical reaction rates and mass transfer rates due to fluid flow fluctuations. Catalysts are applied in coatings on a weight basis in relationship to geometric surface area of catalyst. Insufficient coating area will result in an insufficient catalytic reaction for the desired reactor and combustor design due to insufficient total mass transfer from the fluid to the catalytic surface. The required coating area depends upon operating conditions (e.g. reactant temperature, pressure, velocity, composition) and catalyst activity, and can be determined by methods known in chemical engineering practice.

With the presence of inserts within the catalytic tubes of a catalytic reactor, fluid flow will be slowed, adjusted, or disturbed in a controlled fashion, thus allowing for greater residence time with the coating area containing the catalyst. This produces in a decrease of the required surface area of the catalyst, which results in smaller and less expensive reactors. By additionally coating the inserts themselves, additional catalyst surface area is added to further reduce reactor size and cost. Thus, design of a reactor will balance the surface area for reaction and cooling with the desired volumetric flow rates of the relevant fluids passing through the reactor. Inserts provide the ability to tailor new or existing reactors for a specific application and also provide improved reactor overhaul capability.

The catalytic reactor of the current invention is used for combusting a catalyzed hydrocarbon fuel. A first fluid is passed into catalytic tubes of the catalytic reactor, while a second fluid is passed adjacent the catalytic tubes in the flow paths of the chamber of the catalytic reactor. Both the first fluid and the second fluid can be comprised of air/fuel mixture, or an air stream. At least one of the fluids is comprised of air/fuel mixture and is in contact with a catalyst. The other fluid can be comprised of air/fuel mixture or a different gas or gas mixture such as air. The insert is provided for at least a portion of the tube to modify the flow of the first fluid, and/or add to the catalytic reaction. The flow of the first fluid leaving the catalytic tubes is mixed with the second fluid, and this mixture is combusted. The heat of the catalytic reaction is extracted from fluid in contact with the catalyst and transferred to the other fluid. In one embodiment, the second fluid is controllably introduced into the catalytic reactor. A third fluid, such as additional air or additional air/fuel mixture, can be added to the mixture of the first fluid and the second fluid upon exiting the reactor to achieve a desired stoichiomety for combustion.

Although illustrated in FIGS. 1A-1C as containing a catalyst on the substantial portion of catalytic tube 14, the catalytic reactor may be designed so that the catalyst is only present on a portion of the catalytic tube. Similarly, although the insert is shown running the entire length of catalytic tube 14, the insert may be smaller in length than the length of the catalytic tube, and is mountable in any position therein. Thus, it is envisioned that a reactor may be designed containing any length and geometry of catalytic tube covered with any length with catalyst, and containing an insert along any portion of an interior length of catalytic tube. For example, the catalytic tube may contain catalyst in the last two-thirds of the catalytic tube, while an insert is placed within the tube that has an effective length of the last one-third of the tube. The insert would slow the flow of a fluid in the catalytic tube for the last portion of the tube, and create a turbulence which allows for better mixing upon exiting of the tube.

Placing inserts into the catalytic tubes of catalytic reactor results in increased surface area per unit length for oxidizing the fuel/air mixture internal to the conduits where the catalyst is applied. The result is a tortuous flow path internal to the conduits or tubes which produces swirl within the conduits or tubes to increase residence time for oxidizing the fuel/air mixture. The shape of a conduit can be designed to promote swirl and shear mixing at the exit of the catalytic tube or conduit. With the turbulated flow pattern, the product stream and secondary air streams mix rapidly upon leaving the catalytic reactor and effectively combine to allow combustion of fuel mixture. This reduces emissions from levels currently present in the state of the art, and the potential to remove the size of this secondary region for combustion and the required complexity therein. Overall, adding inserts which increase residence time, i.e. the time the fluid is in the catalytic tube, resulting in greater reaction per unit length. This will allow for the reduction of the size of equipment and the complexity of combustor assemblies. Another advantage of the current invention is its ability to be retrofit into existing catalytic reactor configurations. For example, a twisted metal strip containing a catalyst can easily be added into the internal pathway of the catalytic tube in a current catalytic reactor.

Although the present invention has been described with reference to preferred embodiments, workers skilled in the art will recognize that changes may be made in form and detail without departing from the scope of the invention.

## Claims

1. A catalyst conduit (14) for a catalytic reactor of a turbine combustor, the conduit (14) comprising:
a tube (14) including an inlet (26) and an outlet (32), an interior surface (34) and an exterior surface (36);
an insert (16) mounted within the tube (14) for modifying fluid flow through the tube (14); and
an oxidation catalyst (44) deposited on at least a portion of the tube (14).

2. The conduit of claim 1 wherein the oxidation catalyst covers at least a portion of the exterior surface (36) of the tube (14).

3. The conduit of claim 1 or 2 wherein the oxidation catalyst covers at least a portion of the interior surface (34) of the tube (14).

4. A catalytic reactor (10) comprising:
a housing (12) having an inlet (18) and an outlet (20), the housing (12) defining an interior chamber;
a plurality of tubes (14) mounted within the interior chamber of the housing (12), each tube (14) comprising:
an inlet (26) and an outlet (32), an interior surface (34) and an exterior surface (36);
an insert (16) mounted within at least one of the plurality of tubes (14); and
an oxidation catalyst (44) deposited on at least a portion of the tubes (14);
wherein the interior of the tubes (14) form a first fluid pathway (38); and the exterior surfaces of the tubes and the interior chamber form a second fluid pathway (28) containing an exit port; and
wherein the outlets (32) of the plurality of tubes (14) and the exit port are proximately located such that a first fluid exiting the outlets of the plurality of tubes (14) is in contact with a second fluid which is leaving the housing (12) through the exit port.

5. The catalytic reactor of claim 4 wherein the oxidation catalyst (44) covers the exterior surfaces (36) of the plurality of tubes (14).

6. The catalytic reactor of claim 4 or 5 wherein the oxidation catalyst (44) covers the interior surfaces (34) of the plurality of tubes (14).

7. The conduit or catalytic reactor of any preceding claim wherein the oxidation catalyst (44) is deposited on at least a portion of the insert (16).

8. The conduit or catalytic reactor of any preceding claim wherein the insert (16) comprises a metal strip.

9. The conduit or catalytic reactor of claim 9 wherein the metal strip is twisted.

10. The conduit or catalytic reactor of any preceding claim wherein the insert (16) is coaxially mounted within the tube (14).

11. The conduit or catalytic reactor of any preceding claim wherein the insert (16) comprises a tab (42) for mounting the insert (16) within the tube (14).

12. A method of combusting a catalyzed hydrocarbon fuel, the method comprising:
providing a first fluid and a second fluid, at least one of said fluids is obtained by mixing a hydrocarbon fuel with an air stream;
passing the first fluid into catalytic tubes (14) of a catalytic reactor (10);
passing the second fluid adjacent the catalytic tubes (14) in a chamber of a catalytic reactor (10);
providing, for at least a portion of the tube (14), an insert (16) to modify the flow of the first fluid;
mixing the flow of the first fluid leaving the catalytic tubes (14) with the second fluid;
combusting the mixture of the first fluid and second fluid.

13. The method of claim 12 further comprising:
extracting a portion of the heat of a catalytic reaction of one of the first and second fluids; and
transferring the heat to the other of the first and second fluids.

14. The method of claim 12 or 13 further comprising:
adding a third fluid to the mixture of the first fluid and the second fluid.

15. The method of claim 12, 13 or 14 further comprising:
controllably introducing the second fluid into the catalytic reactor (10).

16. The method of any of claims 12 to 15 wherein the insert (16) is coated with a catalyst (44) to assist a catalytic reaction of the first fluid.

17. The method of any of claims 12 to 16 wherein the insert (16) is configured to decrease the velocity of the first fluid within the catalytic tube (14).

18. An improvement for use in a catalytic reactor (10) of a turbine combustor comprising a catalyst conduit (14), the conduit comprising a tube (14) including an inlet (26) and an outlet (28), an interior surface (34) and an exterior surface (36), wherein an oxidation catalyst (44) is deposited on at least a portion of the tube (14), the improvement comprising:
an insert (16) configured for mounting within the tube (14) for modifying fluid flow through the tube (14).

19. The improvement of claim 18 wherein the oxidation catalyst (44) is deposited on at least a portion of the insert (16).

20. The improvement of claim 18 or 19 wherein the insert (16) is configured for coaxial mounting within the tube (14).

21. The improvement of claim 18, 19 or 20 wherein the insert (16) further comprises a tab (42) for mounting the insert within the tube (14).
